# EUROPEAN PATENT SPECIFICATION

(11) **EP 2 476 170 B1**
(45) Date of publication and mention of the grant of the patent: **08.07.2015**
(21) Application number: 10759700.7
(22) Date of filing: 10.09.2010
(51) Int. Cl.: H01S 3/063, H01S 3/23, H01S 3/0941, H01S 3/16, H01S 3/17

(54) **METHOD OF ACHIEVING RANDOM LASING**
VERFAHREN ZUM ERREICHEN VON ZUFÄLLIGEM LASERN
METHODE POUR OBTENIR UN RAYONNEMENT LASER ALEATOIRE

(30) Priority: 10.09.2009 GB 0915944; 06.11.2009 GB 0919472
(43) Date of publication of application: 18.07.2012
(73) Proprietor: UNIVERSITY OF LEEDS, Leeds LS2 9JT (GB)
(72) Inventor: JOSE, Gin, Leeds Yorkshire LS2 9JT (GB); JHA, Animesh, Leeds Yorkshire LS2 9JT (GB); STEENSON, David Paul, Leeds Yorkshire LS2 9JT (GB)
(74) Representative: Stuttard, Garry Philip
(86) International application number: PCT/GB2010/051514
(87) International publication number: WO 2011/030157

(56) References cited:
- JOSE, G.; IRANNEJAD, M.; STEENSON, D.P.; JHA, A.;: "Ultrafast laser deposition of oxide glass film", EUROPEAN CONFERENCE ON LASERS AND ELECTRO-OPTICS 2009 (CLEO EUROPE, 14-19.06.2009), 7 August 2009 (2009-08-07), XP031504866, DOI: 10.1109/CLEOE-EQEC.2009.5196464 ISBN: 978-1-4244-4079-5
- JOSE, G. ; STEENSON, D.P. ; IRANNEJAD, M. ; JHA, A. ;: "High quality erbium doped tellurite glass films using ultrafast laser deposition", 11TH INTERNATIONAL CONFERENCE ON TRANSPARENT OPTICAL NETWORKS, 2009 (ICTON 2009; 28.06-02.07.2009), 31 July 2009 (2009-07-31), XP002624633, DOI: 10.1109/ICTON.2009.5185229 ISBN: 978-1-4244-4825-8
- SHEN S ET AL: "Fabrication of Er<3+> doped oxyfluoride-silicate glass film by pulsed laser deposition for planar amplifier", JOURNAL OF NON-CRYSTALLINE SOLIDS, NORTH-HOLLAND PHYSICS PUBLISHING. AMSTERDAM, NL, vol. 355, no. 37-42, 13 August 2009 (2009-08-13), pages 1893-1896, XP026525330, ISSN: 0022-3093, DOI: DOI:10.1016/J.JNONCRYSOL.2009.04.054 [retrieved on 2009-08-13]
- CAO, H. ET AL.: "Random Laser Action in Semiconductor Powder", PHYSICS REVIEW LETTERS, vol. 82, no. 11, 15 March 1999 (1999-03-15), pages 2278-2281, XP002624788, DOI: 10.1103/PhysRevLett.82.2278 cited in the application

## Description

The present invention relates to a method of achieving random lasing with a device which comprises a rare-earth-doped glass waveguide, to a process for fabricating the device and to a laser comprising said device.

Lasers that rely on multiple scattering processes in a random scattering medium for optical feedback are known as random lasers. They differ from a conventional laser which relies on resonant optical feedback by reflectors or mirrors.

Random lasing has been the subject of enormous interest to researchers in the area of solid state physics and laser physics. Initial experiments were designed to prove the principles of random lasing and not to identify an efficient laser source for applications. A disordered amplifying medium was created using a fine powder of neodymium doped crystal and random lasing was demonstrated at liquid nitrogen temperature (Markushev, V. M., Zolin, V. F. & Briskina, Ch. M., Powder laser, Zh. Prikl. Spektrosk. 45, 847-850 (1986)). Lasing was demonstrated in a liquid dye gain medium with dispersed scatterers (Martorell, J., Balachandran, R. M. & Lawandy, N. M., Radiative coupling between photonic paint layers. Opt. Lett. 21, 239-241 (1996)). In these experiments, a distinct narrowing of the emission spectrum was observed above a certain threshold which was attributed to stimulated emission in a random scattering medium leading to amplification that can be described using Letokhov's model (Letokhov, V.S. Generation of light by a scattering medium with negative resonance absorption, Zh. Eksp. Teor. Fiz. 53, 1442-1447 (1967); Sov. Phys. JETP 26, 835-840 (1968)). The discrete modes of the laser that would have been present in a random scattering medium where light can be localised was first observed by Cao and co-workers (Cao, H. et al., Random laser action in semiconductor powder, Phys. Rev. Lett. 82, 2278-2281 (1999)). The strong scattering and high gain was achieved in a ZnO nanopowder film of thickness in the range 6-10µm and coherent lasing was observed with angular dependence when pumped using a mode-locked Nd:YAG laser. The lasing threshold was 763 kW/cm². It has been proposed that etching glass or semiconductor crystal can produce very strong scattering media for random lasing (Schuurmans, F. J. P., Vanmaekelbergh, D., van de Lagemaat, J. & Lagendijk, A., Strongly photonic macroporous GaP networks, Science 284, 141-143 (1999) and D. S. Wiersma and S. Cavalieri, "Light emission: A temperature-tunable random laser", Nature 414(6865), 708-709 (2001)).

The media which have been used to demonstrate random lasing have been generally 3-dimensional and require a very high pump threshold to initiate lasing. The media were mostly complex, non-portable, unstable and the distribution of scatterers was non-reproducible. Modes were difficult to preserve.

There has been interest in theoretical studies of 2D structures for random lasers (Apalkov, V. M., Raikh, M. E. & Shapiro, B., Random resonators and prelocalized modes in disordered dielectric films, Phys. Rev. Lett. 89, 016802 (2002)). The use of a random laser deploying a Tm³⁺ ion doped glass powder film claims to have achieved a threshold of several kilowatts per square centimetres (H. Fujiwara, and K. Sasaki, "Observation of upconversion lasing within a thulium-ion-doped glass powder film containing titanium dioxide particles", Jpn. J. Appl. Phys. 43(No. 10B), L1337-L1339 (2004)). The use of random lasers for practical applications as a coherent source has been limited because of their high threshold, low reliability and fabrication difficulties.

US-A-3573653, US-A-3579142, US-A-3787234, US-A-6574249 and US-A-3747021 disclose thin film lasers which are pumped electrically or optically. US-A-5306385 discloses photoluminescent crystalline doped-CaF₂ thin films on a silicon substrate. US-A-5783319 discloses a tunable dye laser comprising an organically doped-silica glass thin film on a silicon substrate. US-A-6656588 discloses a process for preparing a doped nanocrystalline metal oxide powder in the form of a thin film which exhibits lasing.

The present invention is based on the recognition that by confining electromagnetic radiation in a non 3-dimensional doped-glass structure it is possible to achieve improvements in random lasing. In particular, the present invention relates to a device capable of random lasing which exploits a certain rare earth-doped glass waveguide.

Thus, viewed from one aspect the present invention provides a method for achieving random lasing using a device comprising a substrate; and a rare earth-doped glass fabricated on the substrate in the form of a waveguide, wherein the glass comprises a germanium glass, a titanium glass, or a chalcogenide glass. Said method is defined in claim 1.

The device of the present invention is robust and reproducible and advantageously does not require Bragg or conventional mirrors making it straightforwardly integratable with other light emitting devices based on semiconductors and polymers. It exhibits excellent mode stability and is tunable over a surprisingly broad wavelength range.

The device is optically pumpable: the device may be also electrically pumpable, but typically, the device is optically pumped.

When the device is optically pumped, the device may begin laser emission at a certain power output from the pump laser. The minimum power required from the pump laser which causes laser emission in the device may be known as the threshold pump power. This may also be known simply as the 'threshold'. The threshold may also be expressed as a threshold pump power per unit of area of the incident area of the pump laser beam on the device (e.g., watts per mm²). This may also be known as a threshold power density. For example with a threshold pump laser power of 37mW and a pump laser beam of incident area of approximately 1.45mm², the threshold pump power density is approximately 26mW/mm².

The device may be capable of random lasing at a threshold of 1mW or less to produce coherent output from an area less than 2mm². This is equivalent to a threshold power density of 0.5mW/mm².

The threshold power density of the device may be less than 200mW/mm². Preferably the threshold power density of the device is less than 100mW/mm², particularly preferably less than 50mW/mm², more preferably less than 26mW/mm².

The threshold of the device may be less than 1mW. Preferably the threshold of the device is less than 500µW, particularly preferably less than 300µW, more preferably less than 200µW, yet more preferably less than 100µW, even more preferably less than 50µW.

The wavelength of the laser emission from the device may be dependent on the angle of incidence of the pump laser beam. The wavelength of the laser emission from the device may be tuneable. The wavelength of the laser emission from the device may be tuneable by varying the angle of incidence of the pump laser beam.

The wavelength of the laser emission from the device may be tuneable in the range from 1510nm to 1620nm.

The threshold pump power for the device may be dependent on the angle of incidence of the pump laser beam. The threshold pump power for the device may be tuneable by varying the angle of incidence of the pump laser beam.

The threshold of the device may vary in the range between 300µW to 20µW as the angle of incidence of the pump laser is varied between 39° and 51°.

Reducing the threshold or threshold power density reduces the thermal load on the device. A reduced thermal load makes the device more practically applicable because the need for heat dissipation is reduced.

Typically the glass is non-crystalline. Typically the glass is substantially without grain boundaries.

Preferably the glass is capable of multiple scattering. The glass is typically dielectric.

Preferably the glass is porous, particularly preferably nanoporous. A nanoporous glass promotes multiple scattering and facilitates the fabrication of the waveguide.

Preferably the glass is a chalcogenide glass. Particularly preferably the chalcogenide glass comprises sulphur, selenium, tellurium or a mixture thereof.

Preferably the glass is a germanium glass or a tellurium glass, particularly preferably a tellurium glass.

The glass may comprise (or consist essentially of) germanium dioxide (GeO₂).

GeO₂ may be present in the rare earth-doped glass in an amount over 30mol%, preferably an amount in the range 60-90mol%, particularly preferably 75-85mol%.

The glass may comprise (or consist essentially of) tellurium dioxide (TeO₂). TeO₂ is also known as tellurite.

TeO₂ may be present in the rare earth-doped glass in an amount over 30mol%, preferably an amount in the range 60-90mol%, particularly preferably 75-85mol%.

The glass may further comprise one or more network modifiers. The glass may comprise four network modifiers, preferably three network modifiers, particularly preferably two network modifiers. The network modifier may open the network of the glass.

The network modifier may be a network modifying ion. The network modifier may be a metal compound. The metal compound may provide a network modifying ion. The network modifier may be a metal fluoride or oxide. Each network modifier may be present in an amount of 30mol% or less, preferably 20mol% or less, particularly preferably 10mol% or less. Each network modifier may be present in an amount of up to 30mol%, preferably up to 20mol%, particularly preferably up to 10mol%.

The network modifier may be an oxide of at least one of Ba, Bi, Pb, Zn, Al, Ga, La, Nb, W, Ta, Zr, Ti, V and mixtures thereof.

Preferably the network modifier is selected from the group consisting of BaO, Bi₂O₃, PbO, ZnO, Ga₂O₃, Al₂O₃, La₂O₃, Nb₂O₅, WO₃, Ta₂O₅, ZrO₂, TiO₂, V₂O₅, and mixtures thereof. The network modifier may be present in an amount of 30mol% or less, preferably 20mol% or less, particularly preferably 10mol% or less.

Preferably the glass may further comprise one or more of MgO, CaO, SrO, BaO, ZnO, PbO, and mixtures thereof. The one or more of MgO, CaO, SrO, BaO, ZnO, PbO, and mixtures thereof may be present in an amount of 30mol% or less, preferably 20mol% or less, particularly preferably 10mol% or less. These metal oxides may also be network modifiers.

Preferably the glass further comprises one or more alkali metal oxides. Particularly preferably the glass further comprises one or more of Li₂O, Na₂O and K₂O, and mixtures thereof. The one or more alkali metal oxides may be present in an amount of 25mol% or less, preferably 20mol% or less, particularly preferably 10mol% or less. For example, the alkali metal oxide may be present in an amount of approximately 9mol%. The alkali metal oxide may be a network modifier.

Preferably the glass further comprises one or more metal halides, particularly preferably an alkali metal halide. The metal halide may be a network modifier.

The one or more metal halides may be selected from the group consisting of BaCl₂, PbCl₂, PbF₃, LaF₃, ZnF₂, BaF₂, NaCl, NaF, LiF, and mixtures thereof The one or more metal halides may be present in an amount of 20mol% or less.

The glass may further comprise an alkali metal or alkaline earth metal phosphate.

The glass may further comprise an enhancing compound comprising phosphorous or boron. The enhancing compound may be an oxide of phosphorous or boron. Preferably the enhancing compound comprises P₂O₅ or B₂O₃, or a mixture thereof. The enhancing compound may enhance the refractive index of the glass. The enhancing compound may cause random light scattering.

The glass may be doped with a lanthanide. The glass may be doped with a lanthanide oxide.

The glass may be doped with at least one of erbium, ytterbium, neodymium, praseodymium, holmium, cerium, yttrium, samarium, europium, gadolinium, terbium, dysprosium or lutetium.

The glass may be doped with one or more lanthanide ions.

Preferably the glass is doped with one or more ions selected from the group consisting of Nd³⁺, Yb³⁺, Er³⁺, Tm³⁺, Pr³⁺, Ho³⁺, Sm³⁺, Eu³⁺, Tb³⁺, and Ce³⁺.

Preferably the glass is doped with Tm³⁺ or Er³⁺, particularly preferably Er³⁺.

The rare-earth dopant is typically present in an amount in the range 0.01 to 5mol%, preferably 0.5 to 2mol% (*eg*, about 1mol%).

The wavelengths at which the device is capable of random lasing may be selectable. The wavelengths may be selectable by selecting a particular rare-earth dopant or mixture of rare-earth dopants. By selecting a particular rare-earth dopant or mixture of rare-earth dopants and using an appropriate excitation/pumping scheme, the wavelengths at which the device is capable of random lasing may be selected from a range of 600nm to 5000nm.

The glass may have an emission peak in the range 1450 to 1650nm (*eg*, at about 1550nm).

The glass may have an emission cross-section greater than 1 x 10⁻²¹cm² at a wavelength of 1535nm.

The spectral full-width half maximum exhibited by the glass is typically 50nm or more.

The glass may be a high refractive index glass. The glass, when in the form of a film, may have an effective refractive index of 1.5 or more. The effective refractive index at a thickness of 770nm and a wavelength of 633nm is typically about 1.55.

The waveguide may be a fiber, channel, planar or slab waveguide. Preferred is a planar waveguide.

The waveguide is typically in the form of a thin film. The thin film may have a thickness less than 10,000nm (10µm), preferably less that 5,000nm (5µm), preferably less than 1000nm, preferably less than 500nm. Preferably the thin film has a thickness in the range 115 to 777nm.

The substrate may be a silicon based substrate. The substrate may be a polymeric substrate. The substrate may comprise a polymer. The substrate may comprise an electroluminescing device. The substrate may comprise a photoluminescing device.

Preferably the substrate is a silicon-based substrate. The silicon-based substrate may be or include silicon, silica glass, silicon oxide or silicon hydride. The silicon-based substrate may be a semiconductor.

The effective refractive index of the silicon-based substrate may be about 1.455 at 633nm.

The device may be capable of random lasing by electrical or optical excitation. The device may be capable of random lasing by being optically excited by a 980nm continuous wave laser diode at a threshold below 50µW.

The device may be capable of random lasing at a wavelength in the UV, visible, near-IR or mid-IR spectrum.

The device may be obtainable by ablating a target glass with incident radiation from an ultrafast laser in the presence of a silicon-based substrate.

Of independent patentable significance is the recognition that at certain excitation geometries, it is possible to achieve different lasing wavelengths from the device of the invention.

Viewed from a further aspect the present invention provides a laser assembly comprising:
a device as hereinbefore defined; and
an exciter downstream from the device and capable of exciting the device into a laser output.

The exciter may be a focussed exciter.

The assembly surprisingly achieves lasing at different wavelengths across the entire spontaneous emission line width (*eg*, 1512.75 to 1612.15nm for erbium) without mirrors simply by varying the relative disposition of the exciter and device.

Preferably the laser assembly is a tunable laser assembly. The tunable laser assembly may be tunable over a range of up to 100nm.

Preferably the laser assembly further comprises a detector upstream from and capable of measuring the laser output from the device.

Preferably the laser assembly further comprises a collector upstream from and capable of collecting the laser output from the device.

Preferably the angular disposition of the exciter and device is adjustable. This permits the tunability of the laser assembly to be exploited.

Preferably the exciter is a source of electromagnetic radiation. For example, the exciter may be a diode laser or light emitting diode (LED or SLED). The exciter may be a semiconductor laser. For example, the exciter may be a vertical cavity surface emitting laser (VCSEL). The exciter may be a continuous wave laser.

The exciter may be a pump laser. The pump laser may have an output wavelength of 980nm.

Viewed from a yet further aspect the present invention provides a process for fabricating a device as hereinbefore defined comprising:
ablating a target glass with incident radiation from an ultrafast laser in the presence of a substrate whereby to deposit a quantity of the target glass on the substrate.

The substrate may be a silicon based substrate. The substrate may be a polymeric substrate. The substrate may comprise a polymer. The substrate may comprise an electroluminescing device. The substrate may comprise a photoluminescing device.

Preferably the substrate is a silicon-based substrate. The silicon-based substrate may be or include silicon, silica glass, silicon oxide or silicon hydride. The silicon-based substrate may be a semiconductor.

Preferably the target glass is mounted on a rotational platform.

The substrate may be spaced apart from the target glass (*eg*, by a distance of about 70mm). The substrate may be heated (*eg*, to a temperature of 600°C or more).

The incident radiation may be incident on the target glass at an angle in the range 40 to 80° (eg about 60°).

The ultrafast laser may be a pulsed laser. Preferably the ultrafast laser is capable of emitting ultrashort pulses which are target glass ablative. The ultrafast laser may be a femtosecond or picosecond laser. Preferably the ultrafast laser is a femtosecond laser. In the process of the invention, the ultrafast laser may emit pulses of 15ps or less (*eg* pulses in the range 5fs to 15ps). Preferably in the process of the invention the ultrafast laser emits pulses of 150fs or less, preferably in the range 50 to 150fs, particularly preferably about 100fs. The pulses may be emitted with a repetition rate in the range 1 Hz to 100MHz, preferably 1kHz to 20MHz, preferably 1kHz to 1 MHz, preferably 1kHz to 200kHz.

The ultrafast laser may be mode-locked. The average power of the ultrafast laser may be 80W or less. The wavelength is typically about 800nm.

The ultrafast laser may be (for example) a Ti-sapphire laser, a diode pumped laser such as a Yb-doped or Cr-doped crystal laser or a fibre laser.
The laser may be an excimer laser or an exciplex laser.

The pulse energy is typically in the range 1µJ to 100mJ, preferably 10µJ to 100mJ (*eg* in the range 50 to 300µJ). Pulse energy may be selectively adjusted using an attenuator.

The process is typically carried out in a vacuum chamber. The process may be carried out at reduced pressure (*eg*, in the presence of oxygen at a partial pressure of about 70mTorr). The duration of the process may be 30 minutes or more.

The device according to the invention may be used in communication, computer or display technology and in laser assemblies. The device according to the invention may be used in integrated optics (*eg* as a signal source), chemical sensing, environmental sensing, bio-sensing, micro-nano spectroscopy, optical communication, micro fluidic devices, opto-fluidic devices, terahertz amplifiers, lab-on-chip or optical tomography.

An embodiment of the invention will now be described in detail and by way of example only with reference to the accompanying drawings in which:
Figure 1 shows the optical transmittance spectrum (under normal incidence) recorded using UV-VIS-NIR wavelength region of a film in a device according to an embodiment of the present invention;
Figure 2a shows an optical micrograph of the film of Figure 1 at a magnification of 20x;
Figure 2b shows an optical micrograph of the film of Figure 1 at a magnification of 50x;
Figure 2c shows an optical micrograph of the inside of the film of Figure 1 at a magnification of 50x;
Figure 3 shows the fluorescence spectrum of the film in comparison to that of the glass target;
Figure 4 shows the absorption and emission of photons by the erbium ions which provide the erbium laser mechanism;
Figure 5a shows how the fluorescence of the film was monitored at different angles of collection θ by varying the angle of incidence of the pump laser by rotating the film clockwise;
Figure 5b shows the resulting output spectrum at the different angular positions defined in Figure 5a;
Figure 6a shows the observed longest wavelength spectrum corresponding to an angle of 39° (error of ±0.5°);
Figure 6b shows lasing was also observed at wavelengths well below 1534nm where the absorption cross-section is greater than the emission cross-section;
Figure 6c shows that lasing was observed at wavelengths as low as 1515nm;
Figure 7 shows the spectrum of the laser at two different pump powers;
Figure 8 shows the integrated output intensity *vs* incident pump power;
Figure 9 shows an AFM image of a section of the surface of a sample of the glass film;
Figure 10 shows the laser emission output from a sample of the glass film; and
Figure 11 shows the threshold power varying with different angles of θ.

### Example

### Fabrication of a nanoporous tellurite glass film doped with erbium ions on a silica glass substrate by pulsed laser deposition.

A target tellurite glass was prepared by batch melting and quenching TeO₂, ZnO and Na₂O at a relative molar composition of 80 mol% TeO₂ 10mol% ZnO and 10 mol% Na₂O. The glass was doped with 1 mol% erbium oxide. The resulting target tellurite glass had the composition: 80 mol% TeO₂, 10 mol% ZnO, 9 mol% Na₂O and 1 mol% erbium oxide. The tellurite glass has a very high refractive index (>2 at 633 nm) providing strong scattering.

A silica glass substrate was placed at a distance of 70mm above the target tellurite glass in a chamber. The chamber was pumped down to below 10⁻⁶ Torr and oxygen atmosphere was maintained at a pressure of 70 mTorr. The substrate heater temperature was set at 700°C and held at this temperature during deposition.

Thin films of glass were prepared by an ablation process using a femtosecond laser. The laser with a pulse duration of 100fs was focussed at an angle of incidence of 60° at the target tellurite glass. The energy of the laser with a repetition rate of 500 Hz was 52 µJ.

Laser ablation was carried out for 3 hours. The target was rotated at a speed of 40 rpm and a proper rastering was applied to ablate the target uniformly while the substrate was at a speed of 20 rpm. The substrate was cooled down to room temperature rapidly after deposition.

An empirical approach was deployed to optimize the process parameters to optimize the film quality. This was successful even though the relative position of the laser spot on the target with respect to the substrate was constant during the ablation. There was a thickness modulation that is attributable to the density profile of the laser plasma.

### Properties

The erbium-doped tellurite glass film fabricated on a silica glass substrate by the femtosecond laser ablation process described above was examined by different methods.

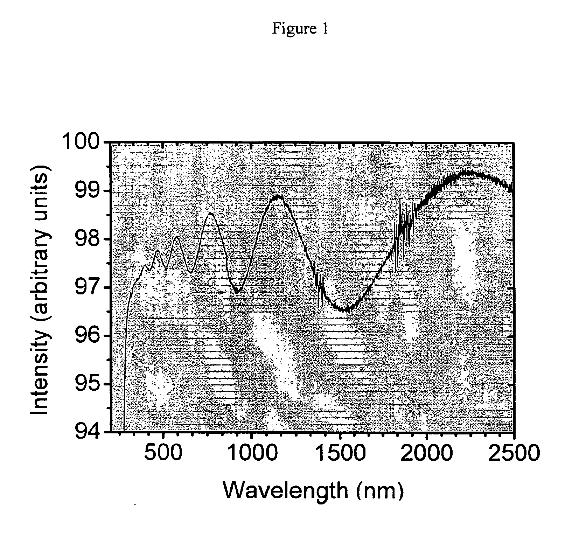

Figure 1 shows the optical transmittance spectrum (under normal incidence) of the film recorded using UV-VIS-NIR wavelength region. The film showed very high transmittance (> 98%) over the wavelength region and a distinct interference pattern indicative of good uniformity.

Although the results of only a single film are presented below, lasing was observed in films having lower thicknesses and different porosities. The optical properties of the film were investigated using spectroscopic ellipsometry and showed some interesting characteristics. The thickness at the middle of a sample having dimensions 3x2cm² obtained from the ellipsometry data was 777nm and thickness variation was about 150nm/cm across the film. The thickness variation is attributed to the fact that the relative position of the laser ablation spot and the substrate was constant during deposition and the laser beam has a Gaussian intensity profile with a spot area less than 3000 µm². The surface roughness of the film was in the range 17 to 23 nm over the surface where the lasing experiments was performed. This roughness of the film resulted in a lower effective refractive index than that of the glass target used to prepare the film. At 633nm the refractive index of the glass measured using spectroscopic ellipsometry was 1.935 whilst that of the film was 1.549 at a region where the surface roughness was 22.69nm and 1.552 at a lower roughness of 17.16nm. The results of the spectroscopic ellipsometry were a clear indication of a nanoporous film.

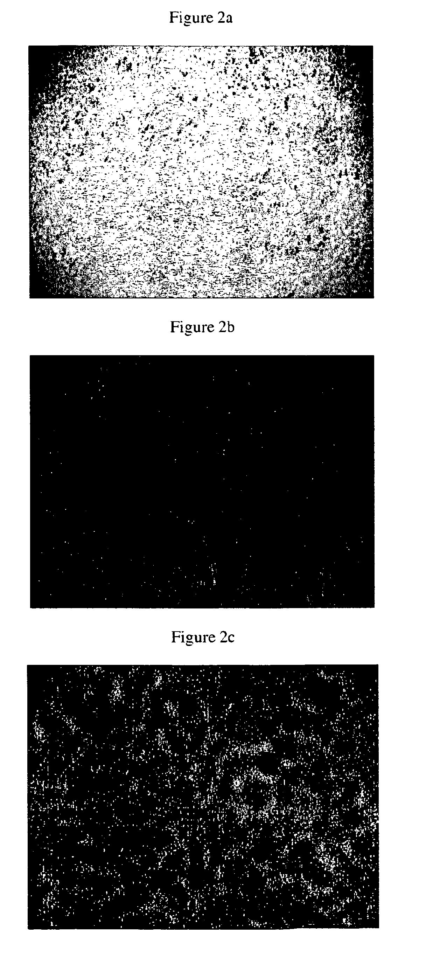

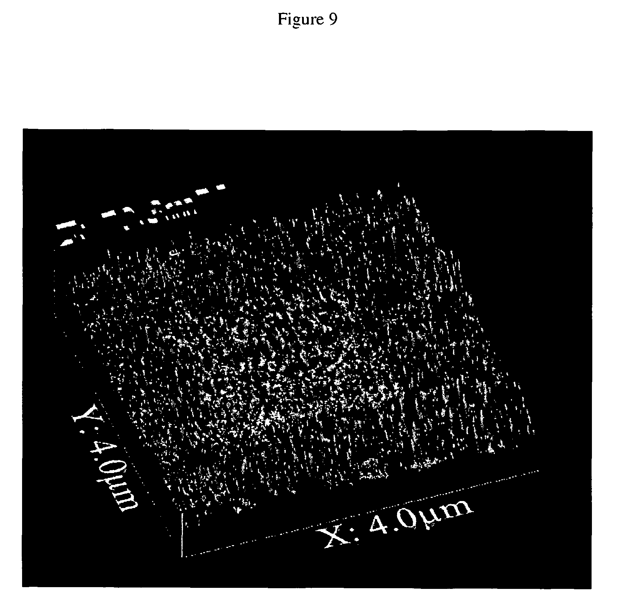

The optical micrograph of the films shown in Figure 2 revealed no cracking or peeling. However the roughness of the surface is clearly evident. In order to further understand the film morphology, atomic force microscopy (AFM) was used. Figure 9 shows an AFM image of a section of the surface of a glass film. The surface roughness of the glass film in the nanoscale can be seen clearly from Figure 9. The dimension of the glass strands formed on the substrate showed the random distribution.

### Laser Performance

The film was excited using a focussed beam of a fibre pigtailed laser diode with an output peaked at 980nm and the fluorescence was collected transverse to the film and detected using a liquid nitrogen cooled photomultiplier tube attached to an Edinburgh Instruments' (UK) spectrofluorimeter.

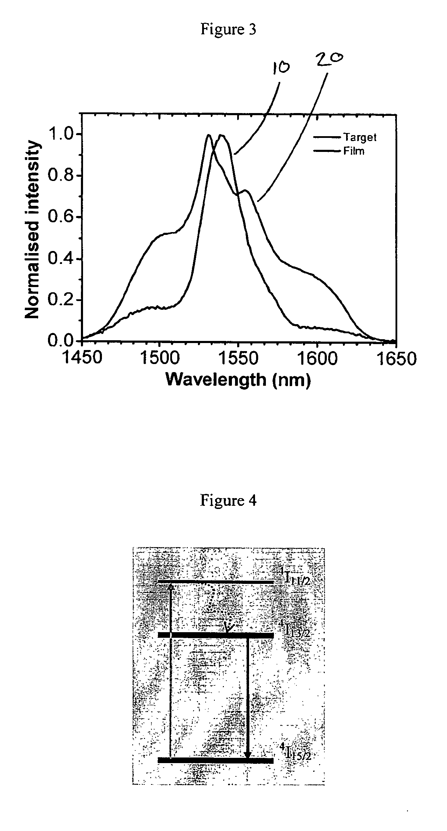

Figure 3 shows the fluorescence spectrum of the film 10 in comparison to that of the bulk tellurite glass target 20.

The absorption and emission of photons by the erbium ions occurs by the process shown in Figure 4. The pump laser at around 980nm excites the ions to the ⁴I_{11/2} level and some ions relaxes non-radiatively to ⁴I_{13/2}. The erbium ions in this excited state decay radiatively to the ground state ⁴I_{15/2} by emitting photons in the wavelength band peaked around 1535 nm. This particular emission has been exploited successfully in optical fibre and waveguide amplifiers and is the core to the success of broadband fibre optic communication systems.

The spectral width of the fluorescence signal for the film has been narrowed compared to that of the target tellurite glass. The FWHM for the glass is 72.6 nm while that of the film is only 31 nm. This narrowing of the spectrum is attributed to the amplification of spontaneous emission through scattering and stimulated emission in a random medium.

The observed spectrum of the film is direct evidence of the model that predicts that the emission spectrum narrows down above threshold with a maximum intensity at the wavelength of maximum gain. This is manifested in the shifting of the peak of the spectrum towards longer wavelengths and also in the longer fluorescence decay lifetime of 11.9 ms observed for the film while the target was only 3.8 ms.

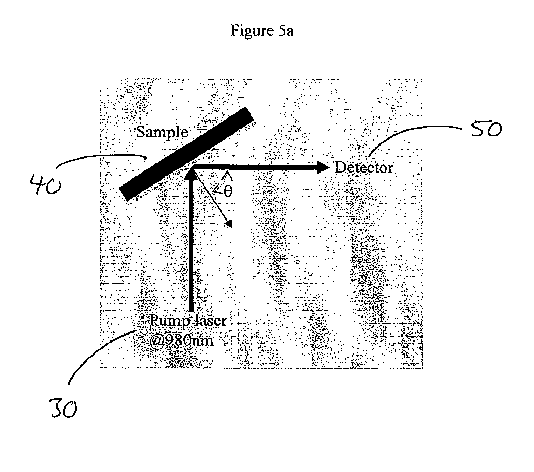

Since the spectral narrowing and longer lifetime clearly pointed to random lasing with localisation, the angle of incidence (corresponding to θ) of the pump laser 30 was varied by rotating the film sample 40 clockwise and the fluorescence was monitored at different angles of collection θ by the detector 50 (see Figure 5a).

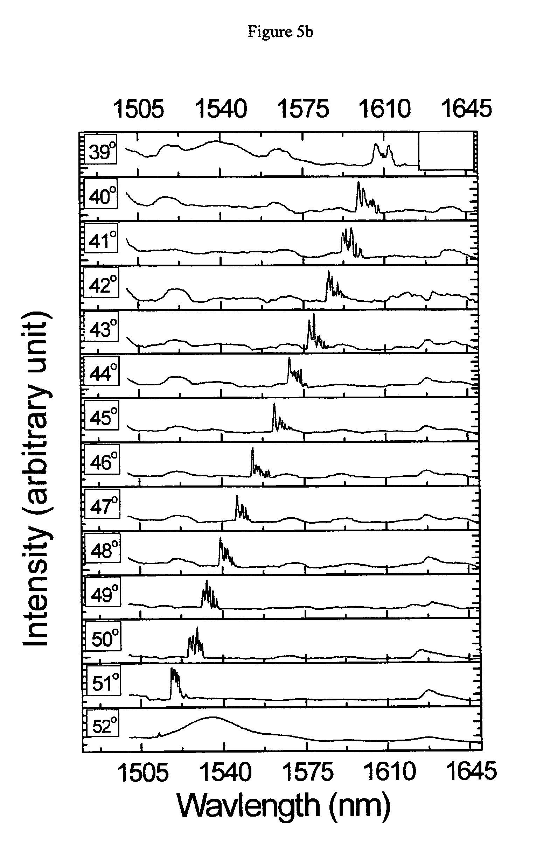

Lasing was observed at an angle of collection around 39° at the longer wavelength tail of the erbium gain band. Discrete modes were present in the spectrum with the longest wavelength lasing mode at 1615.15nm. The laser peaks were then systematically recorded by varying the angle at a constant incident pump power of 37.39 mW and the resulting output spectrum at different angles shown in Figure 5b.

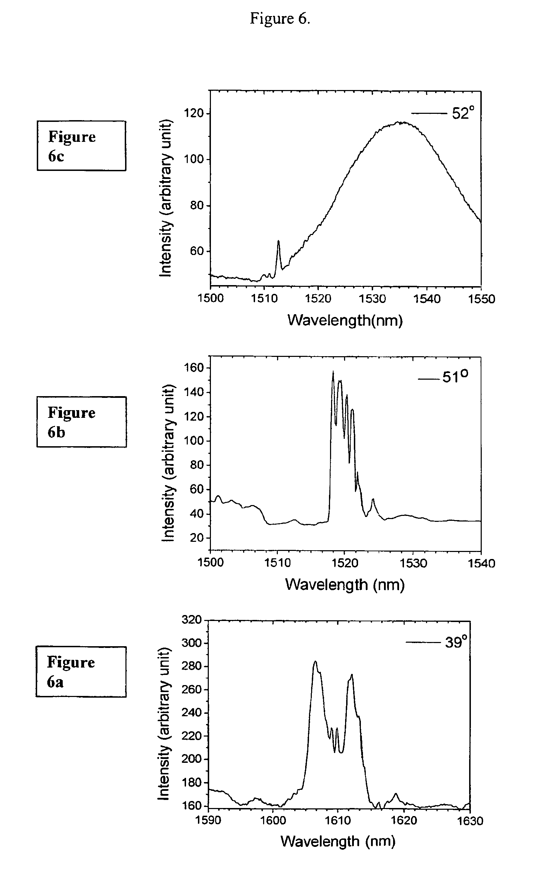

The observed longest wavelength spectrum corresponding to an angle of 39° (error of ±0.5°) is shown enlarged in Figure 6a. The laser emission band spanned the wavelength range of 1604.3 to 1615.15nm. The resolution of the spectrometer was 0.3 and peaks with widths narrower than this were not resolved. The peak laser wavelength was shifted towards the lower wavelengths in the gain spectrum of the erbium ions when the angle of collection was increased. Lasing with narrow spikes in the spectrum predicted in random lasers were clearly observed in the entire gain spectrum of the erbium ions and lasing was also surprisingly observed at wavelengths well below 1534nm where the absorption cross-section is greater than emission cross-section (see Figures 6b). Lasing was observed at wavelengths as low as 1515nm (see Figure 6c).

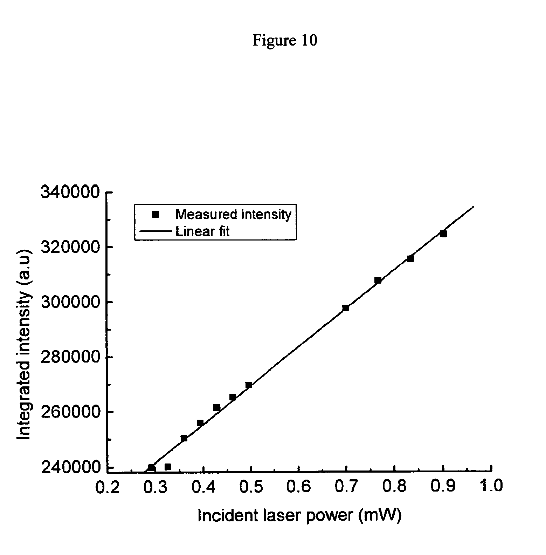

Figure 10 shows the integrated laser intensity for the wavelength range 1610-1625nm plotted against incident pump power. The threshold of the laser is approximately 290 µW but varies at different positions on the film and for different lasing wavelengths, nevertheless the threshold is in the sub-mW range, for wavelengths above 1520 nm, and is the lowest recorded for random lasers.

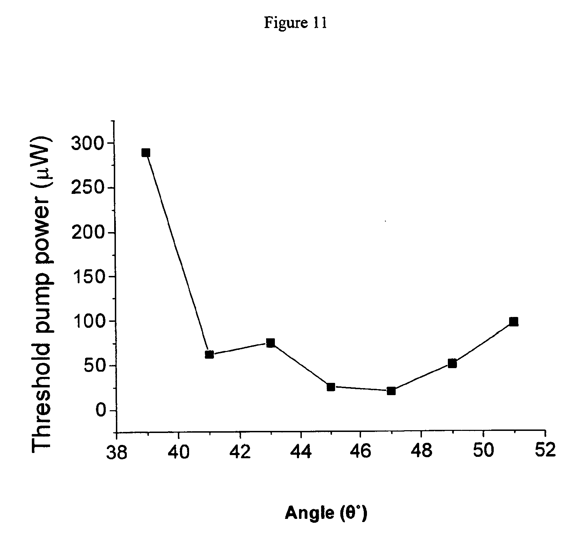

Figure 11 shows the threshold power varying with different angles of θ. The threshold power for different values of θ is tabulated in Table 1 below:

**Table 1: variation of threshold power with different angles of θ**

| **θ°** | **Threshold Power (µW)** |
|---|---|
| 39 | 290 |
| 41 | 65 |
| 43 | 75 |
| 45 | 25 |
| 47 | 20 |
| 49 | 50 |
| 51 | 100 |

This is a demonstration of amplification by localization, *ie*, a spontaneously emitted photon being amplified by the localization in a random media. Figure 6 also shows the broad amplified spontaneous emission spectrum. This is the lowest wavelength lasing ever recorded in an erbium doped system and definitive proof of light localization in the porous glass film.

The spot size of the laser at the film when it was oriented at a right angle to the incident laser beam was 1.36mm. That means it is lasing from an area approximately 1.45mm² or a volume of 1.13x10⁻³ mm³. The shifting of the spectrum towards shorter wavelengths on decreasing the angle is attributed to the shortening of the photon mean free path of the photons that allow only shorter wavelengths to acquire the threshold to lase.

### Dependence of the laser spectrum and integrated intensity on the incident laser power

The angle of collection was fixed at 48° and lasing was observed even below the threshold of the laser diode used in the experiment due to the spontaneous emission noise. The power was ∼15µW.

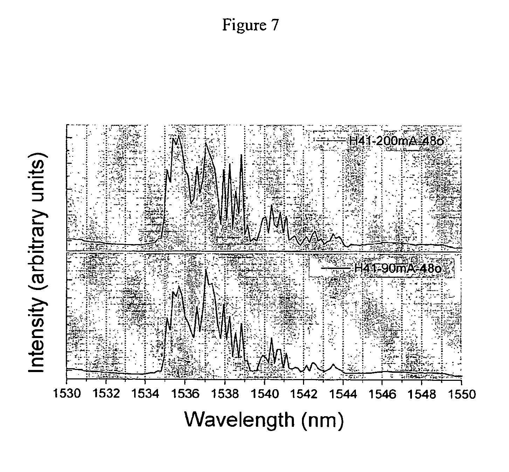

Figure 7 shows the spectrum of the laser at two different pump powers. Excellent mode stability is evident from Figure 7 by comparing the peaks observed at two different powers well above the laser threshold. This is another characteristic of a random laser.

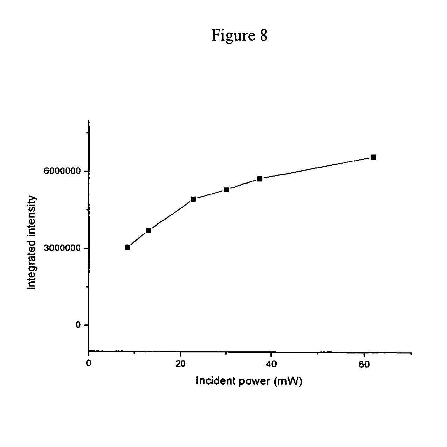

The threshold power (<26mW/mm²) is the lowest ever recorded for an erbium laser and for a random laser. The integrated output intensity *vs* incident pump power is shown in Figure 8.

## Claims

1. A method of achieving random lasing comprising:
- fabricating a device (40) comprising a substrate and a rare earth-doped glass fabricated on the substrate in the form of a waveguide, wherein the glass comprises a germanium glass, a titanium glass or a chalcogenide glass, wherein fabricating comprises the two steps of:
- ablating a glass target with incident radiation from an ultrafast laser in the presence of a substrate whereby to deposit a quantity of the glass target on the substrate, and
- applying rastering to ablate the glass target uniformly,
- wherein the ultrafast laser emits pulses of 15ps or less and the relative position of the laser spot on the glass target with respect to the substrate is constant during the ablation and wherein the Gaussian intensity profile of the laser beam has a spot area less than 3000µm², and
the method further comprises:
- exciting the device by a source of electromagnetic radiation (30).

2. A method as claimed in claim 1 wherein the ultrafast laser is a femtosecond laser.

3. A method as claimed in claim 1 or 2 wherein the incident radiation from the ultrafast laser is emitted in pulses with a duration of 150fs or less.

4. A method as claimed in claim 1, 2 or 3 wherein the incident radiation from the ultrafast laser is emitted in pulses with a repetition rate in the range 1 Hz to 100MHz.

5. A method as claimed in any of claims 1 to 4 wherein the incident radiation pulse energy is in the range 1µJ to 100mJ.

## Patentansprüche

1. Verfahren zum Erreichen eines zufälligen Laserns, umfassend:
- Herstellen einer Vorrichtung (40), die ein Substrat und ein Selten-Erd-dotiertes Glas, das in der Form eines Wellenleiters auf dem Substrat hergestellt wird, umfasst, wobei das Glas ein Germaniumglas, ein Titaniumglas oder ein Chalkogenidglas umfasst, wobei das Herstellen die folgenden zwei Schritte umfasst:
- Abdampfen eines Glastargets mit einfallender Strahlung von einem ultraschnellen Laser in Anwesenheit eines Substrats, wodurch eine Menge des Glastargets auf dem Substrat abgeschieden wird, und
- Anwenden einer Rasterung um das Glastarget gleichmäßig abzudampfen,
- wobei der ultraschnelle Laser Pulse mit 15 ps oder weniger emittiert und die relative Position des Laserspots auf dem Glastarget bezüglich des Substrats während des Abdampfens konstant ist und wobei das Gaußsche Intensitätsprofil des Laserstrahls eine Spotfläche von weniger als 3000 µm² hat, und wobei das Verfahren weiter umfasst:
- Anregen der Vorrichtung mit einer elektromagnetischen Strahlungsquelle (30).

2. Verfahren nach Anspruch 1, wobei der
ultraschnelle Laser ein Femtosekundenlaser ist.

3. Verfahren nach Anspruch 1 oder 2, wobei
die einfallende Strahlung des ultraschnellen Lasers in Pulsen mit einer Dauer von 150 fs oder weniger emittiert wird.

4. Verfahren nach Anspruch 1, 2 oder 3,
wobei die einfallende Strahlung des ultraschnellen Lasers in Pulsen mit einer Wiederholrate im Bereich von 1 Hz bis 100 MHz emittiert wird.

5. Verfahren nach einem der Ansprüche 1-4, wobei die einfallende Strahlungspulsenergie im Bereich von 1 µJ bis 100 mJ liegt.

## Revendications

1. Procédé d'obtention d'une émission laser aléatoire comprenant :
- la fabrication d'un dispositif (40) comprenant un substrat et un verre dopé aux terres rares fabriqué sur le substrat sous la forme d'un guide d'ondes, où le verre comprenant un verre au germanium, un verre au titane ou un verre de chalcogénure, où la fabrication comprend les deux étapes consistant :
- à ablater une cible en verre avec un rayonnement incident provenant d'un laser ultrarapide en présence d'un substrat afin de déposer une quantité de la cible en verre sur le substrat, et
- à appliquer un tramage pour ablater la cible en verre de manière uniforme,
où le laser ultrarapide émet des impulsions de 15 ps ou moins et la position relative du point laser sur la cible en verre par rapport au substrat est constante pendant l'ablation et où le profil d'intensité Gaussien du faisceau laser a une surface de point inférieure à 3000µm², et
le procédé comprend en outre :
- l'excitation du dispositif par une source de rayonnement électromagnétique (30).

2. Procédé tel que revendiqué dans la revendication 1 dans lequel le laser ultrarapide est un laser femtoseconde.

3. Procédé tel que revendiqué dans la revendication 1 ou 2 dans lequel le rayonnement incident provenant du laser ultrarapide est émis par impulsions avec une durée inférieure ou égale à 150 fs.

4. Procédé tel que revendiqué dans la revendication 1, 2 ou 3 dans lequel le rayonnement incident provenant du laser ultrarapide est émis par impulsions avec une fréquence de répétition se trouvant dans la plage allant de 1 Hz à 100 MHz.

5. Procédé tel que revendiqué dans l'une des revendications 1 à 4 dans lequel l'énergie d'impulsion de rayonnement incident est dans la plage allant de 1 µJ à 100 mJ.
